# EUROPEAN PATENT APPLICATION

(11) **EP 4 564 867 A1**
(43) Date of publication of application: **04.06.2025**
(21) Application number: 24211093.0
(22) Date of filing: 06.11.2024
(51) Int. Cl.: H04W 8/20, H04W 4/24

(54) **PROACTIVE ELECTRONIC SUBSCRIBER IDENTITY MODULE (ESIM) MODIFICATION AND INTEGRATION**

(30) Priority: 30.11.2023 US 202318525637
(71) Applicant: T-Mobile Innovations LLC, Bellevue, WA 98006 (US)
(72) Inventor: AN, Kyeong Hun, Sammamish, 98074 (US); HOMORODI, Zoltan, North Bend, 98045 (US); RANJAN, Nilesh, Sammamish, 98076 (US)
(74) Representative: Suddaby, Mark Edward

(57) **Abstract**

A method comprises storing, in an over-the-air (OTA) system of the core network, an update to an electronic subscriber identity model (eSIM) profile, transmitting, by the OTA system, the update to the eSIM profile to a remote subscriber identity module provisioning (RSP) system of the core network, updating, by an update application of the RSP system, the eSIM profile based on the update to the eSIM profile received from the OTA system by adding the one or more files to the eSIM profile, modifying the one or more files in the eSIM profile, or updating the file in the eSIM profile to include the additional or modified data, and downloading, by the download application of the UE, the eSIM profile to the UE.

## Description

### CROSS-REFERENCE TO RELATED APPLICATIONS

None.

### STATEMENT REGARDING FEDERALLY SPONSORED RESEARCH OR DEVELOPMENT

Not applicable.

### REFERENCE TO A MICROFICHE APPENDIX

Not applicable.

### BACKGROUND

A subscriber identity module (SIM) provides a unique number or "identity" to subscribers of cellular network services. A device may be configured with either a physical SIM card or an electronic SIM (eSIM). A physical SIM card is an integrated circuit running a card operating system intended to securely store certain values and related network credentials/keys used to identify and authenticate the device to a cellular network. An eSIM is a digital version of the physical SIM card, identifying the device virtually to provide a network connection. Unlike the physical SIM card that can be inserted and removed, an eSIM may be built into the hardware of the device, and an eSIM may be updated digitally, allowing the device to change carriers and connect to a mobile network without handling a physical SIM card. Both the physical SIM card and the eSIM may require activation before being capable of connecting the device to a carrier network to provide Internet access to the device. The activation methods of the physical SIM card may be different than the activation methods of the eSIM.

### SUMMARY

In an embodiment, a method performed by a core network for proactively updating and providing an electronic subscriber identity module (eSIM) profile to a user equipment (UE) is disclosed. The method comprises associating, by an activation application of a billing system of the core network, an integrated circuit card identification (ICCID) of a base eSIM profile with a Mobile Station International Subscriber Directory Number (MSISDN) of the UE to register the UE with the base eSIM profile in a carrier network associated with the core network, and storing, in an over-the-air (OTA) system in the core network, an update to the base eSIM profile. The update comprises at least one of an addition or modification of one or more files in the base eSIM profile or an update to a file in the base eSIM profile to include additional or modified data. The method further comprises transmitting, by the OTA system, the update to the base eSIM profile to a remote subscriber identity module provisioning (RSP) system of the core network in response to receiving a request for the update to the base eSIM profile from a request application in the RSP system, and updating, by an update application of the RSP system, the base eSIM profile based on the update received from the OTA system to obtain an updated eSIM profile by adding the one or more files to the base eSIM profile, modifying the one or more files in the base eSIM profile, or updating the file in the base eSIM profile to include the additional or modified data. The method further comprises downloading, by a download application of the UE, the updated eSIM profile to an embedded universal integrated circuit card (EUICC) of the UE.

In another embodiment, a communication system is disclosed. The communication system comprises an activation application, stored in a first non-transitory memory associated with a billing system, which when executed by a first processor, causes the first processor to be configured to associate an integrated circuit card identification (ICCID) of a base electronic subscriber identity module (eSIM) profile with a Mobile Station International Subscriber Directory Number (MSISDN) of a user equipment (UE) to register the UE with the base eSIM profile in a carrier network. The communication system further comprises a second non-transitory memory associated with an over-the-air (OTA) system, wherein the second non-transitory memory is configured to store an update to the base eSIM profile, wherein the update comprises at least one of an addition or modification of one or more files in the base eSIM profile or an update to a file in the base eSIM profile to include additional or modified data. The communication system further comprises a request application, stored in a third non-transitory memory associated with a remote subscriber identity module provisioning (RSP) system, which when executed by a third processor, causes the third processor to be configured to receive, from the OTA system, the update to the base eSIM profile. The communication system further comprises an update application, stored in the third non-transitory memory associated with the RSP system, which when executed by the third processor, causes the third processor to be configured to update the base eSIM profile based on the update received from the OTA system to obtain an updated eSIM profile. The communication system further comprises a download application, stored in a fourth non-transitory memory associated with the UE, which when executed by a fourth processor, causes the fourth processor to be configured to transmit, to the RSP system, request for the updated eSIM profile registered with the UE, and download the updated eSIM profile to the UE.

In yet another embodiment, a method performed by a core network for proactively updating and providing an electronic subscriber identity module (eSIM) profile to a user equipment (UE) is disclosed. The method comprises storing, in an over-the-air (OTA) system of the core network, an update to the eSIM profile, wherein the update comprises at least one of an addition or modification of one or more files in the eSIM profile or an update to a file in the eSIM profile to include additional or modified data, and transmitting, by the OTA system, the update to the eSIM profile to a remote subscriber identity module provisioning (RSP) system of the core network in response to receiving a request for the update to the eSIM profile from a request application in the RSP system. The method further comprises updating, by an update application of the RSP system, the eSIM profile based on the update to the eSIM profile received from the OTA system by adding the one or more files to the eSIM profile, modifying the one or more files in the eSIM profile, or updating the file in the eSIM profile to include the additional or modified data, and deleting, by the OTA system, the update to the eSIM profile in response to receiving an indication from the RSP system that the eSIM profile has been updated at the RSP system. The method further comprises receiving, by the RSP system from a download application of the UE, a request for the eSIM profile registered with the UE, and downloading, by the download application of the UE, the eSIM profile to an embedded universal integrated circuit card (EUICC) of the UE.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIG. 1 is a block diagram of a system according to various embodiments of the disclosure.
FIGS. 2A-B are message sequence diagrams illustrating communications between components of the system in FIG. 1 to perform a method for proactive eSIM modification and integration according to various embodiments of the disclosure.
FIG. 3 is a flow chart of a method for proactive eSIM modification and integration according to various embodiments of the disclosure.
FIG. 4 is a flow chart of another method for proactive eSIM modification and integration according to various embodiments of the disclosure.
FIG. 5A and FIG. 5B are block diagrams of a 5G network according to an embodiment of the disclosure.
FIG. 6 is a block diagram of a computer system according to an embodiment of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

When a wireless communication device or a user equipment (UE) (e.g., phone, tablet, wearable device, Internet of Things (loT) device) is sold to a subscriber of a mobile network operator (MNO), the UE may need to be activated before the UE may connect to a carrier network of the MNO, and thereby have access to the Internet. Part of this activation involves the installation of a physical SIM card or the downloading of an eSIM profile to the UE. The physical SIM card and the eSIM profile both function to identify and authenticate the UE in providing network connection to the UE via the carrier network. The physical SIM card is an integrated circuit running a card operating system intended to securely store certain values and related network credentials/keys used to identify and authenticate the UE to the carrier network. The physical SIM card may be inserted or removed from the UE. Meanwhile, an eSIM profile may be provisioned with similar network access keys and/or network access credentials, branding information, applications, and other data artifacts. The eSIM profile may be downloaded from the carrier network and stored with an embedded universal integrated circuit card (eUICC) of the UE.

For example, an entity in the core network of the carrier network may store numerous base eSIM profiles upon procurement of the eSIM profiles. The base eSIM profiles may be generic eSIM profiles that may not yet be associated with a particular subscriber. For example, each base eSIM profile may include an integrated circuit card identification (ICCID) uniquely identifying a respective eSIM profile. An ICCID may be an identifier of 19 or 20 characters including, for example, the industry identifier (ISO), country code, issuer identity, account identifier, and other data allowing the MNO to identify the eSIM profile. Each base eSIM profile may also include data related to the MNO, such as, for example, operator credentials and in some cases third-party SIM based applications.

A UE may include an eUICC, which may be soldered inside the UE and may accommodate multiple eSIM profiles. When a subscriber purchases the UE, the UE may include the eUICC, but may not yet include an eSIM profile for the MNO. Upon purchasing the UE, the billing system in the core network of the carrier may perform the steps to register the UE to the subscriber and associate a particular base eSIM profile with the UE. To this end, the billing system may communicate with a remote SIM provisioning (RSP) system in the core network to request data related to an eSIM profile that may be provided to the newly purchased UE. The RSP system may respond to the billing system with an ICCID of a base eSIM profile allocated for the UE. The billing system may register the UE with the base eSIM profile by associating the ICCID of the base eSIM profile with a Mobile Station International Subscriber Directory Number (MSISDN) of the UE. At this point, the billing system may also send a notification to an over-the-air (OTA) system in the core network with activation data indicating the registration between the newly purchased UE and the newly allocated eSIM profile.

The activation of an eSIM profile may be a two-step process. First, the UE may request the base eSIM profile allocated for the UE from the RSP system. This request may be performed in a variety of different manners. For example, the UE may receive instructions on how to connect the UE to the RSP system using a Quick Response (QR) code provided to the UE. The QR code may contain the address of the RSP system, allowing the UE to connect to the RSP system and securely download the allocated base eSIM profile. Once the allocated base eSIM profile is downloaded to the UE, the UE may be able to connect to the carrier network associated with the MNO.

After this first step, the UE may be authenticated to access the carrier network, through which the UE may have a cellular connection to the Internet. However, when the UE first connects to the carrier network, the carrier network (e.g., an equipment identity register (EIR) system in the core network) may recognize that this is the first time the UE is connecting to the network. This may trigger the EIR system to check with the OTA system to determine whether the base eSIM profile downloaded to the UE has any pending updates, which may be required for the UE to properly connect to the carrier network and any peer networks. To this end, the OTA system may maintain data regarding any updates that may need to be performed or sent to the base eSIM profile at the UE, such that the UE may update the base eSIM profile based on the updates received from the OTA system to obtain an updated eSIM profile. For example, an update to the eSIM profile may be an update to the data in a file already present in the base eSIM profile, the update to the eSIM profile may be an addition of one or more files to the base eSIM profile, or the update to the eSIM profile may be a deletion of data or files in the base eSIM profile. Therefore, an update to the base eSIM profile may generally be characterized as some sort of modification to the base eSIM profile, which in this case is already provisioned at the UE. The update sent to the UE may include the actual files or data that may need to be included or modified at the base eSIM profile.

Therefore, the second step of the activation process that ensures proper functioning of the UE with the carrier network may be the step of sending all updates to the UE over the network. The UE may perform the updating of the base eSIM profile to obtain the updated eSIM profile based on the received update.

However, the two-step activation process that may be used to fully activate an eSIM profile is largely wasteful from a network resource perspective because it involves the sending of large files/data from the core network, through the backhaul network, all the way to the end UE. The two-step activation process also puts the burden of performing the eSIM update on the UE, while the UE may be far more limited in processing power relative to the other systems in the core network. Therefore, the two-step activation process that may be used to fully activate an eSIM profile consumes an unnecessarily large amount of network capacity and may require a heavy processing load at the end UE.

The present disclosure teaches a technical solution to the foregoing technical problem related to UE activation and authentication with the carrier network by performing the updates at the core network instead of the UE, thereby eliminating the need to separately send the update to the UE at a subsequent time. In particular, the embodiments disclosed herein perform the initial updates to the base eSIM profile at the core network such that the updated eSIM profile may be downloaded directly to the UE.

In particular, the core network may include the billing system, RSP system, OTA system, EIR system, and, as should be appreciated, other systems and components otherwise not discussed herein. In the embodiments disclosed herein, the billing system may still be responsible for performing the aforementioned registration process to associate a UE with a base eSIM profile upon request by a subscriber. The billing system may also notify the OTA system when an eSIM profile at the RSP system has been registered with a UE. For example, the billing system may transmit a message to the OTA system with activation data indicating that the UE identified by a MSISDN is allocated to an eSIM profile identified by an ICCID.

The OTA system may use the ICCID to determine that the eSIM profile identified by the ICCID may need to be updated based on an update, which may indicate the data and/or files that may need to be modified (e.g., updated/added to/deleted) at the eSIM profile. The update may be stored, for example, in a data store at the OTA system, associated with the MSISDN and/or the ICCID received in the message from the billing system.

In an embodiment, the update stored at the OTA system may include the actual data or files that should be updated/added to/deleted from the base eSIM profile. For example, the update may include updated data (e.g., content) that may need to be included in or added to a file that is already stored with the base eSIM profile, the update may include one or more new files that may need to be added to the base eSIM profile, or the update may include any sort of modification to the data stored at the base eSIM profile. In another embodiment, the update stored at the OTA system may include data describing a modification (e.g., update/addition/deletion) that may need to be made to the data or files stored with the base eSIM profile. For example, the update may include data that may need to be added to a file that is already stored with the base eSIM profile, or the update may include a description of data or content that may need to be added to the base eSIM profile as one or more new files. In the latter case in which the update only includes data describing the modification (i.e., not the actual updated files/data), the updates stored at the OTA system may be smaller in size, freeing up more memory in the OTA system.

For example, the update may indicate an update to an MSISDN file by either including a new MSISDN file with a new MSISDN or including just the new MSISDN. As another example, the update may include an update to a preferred roaming list (PRL) by either including a new PRL file with an updated PRL or including data describing a change to a PRL file already stored with the eSIM profile (e.g., revise the PRL list to remove on roaming peer, replace one roaming peer with another, etc.). As yet another example, the update may indicate an update to an Internet Protocol (IP) multimedia public identity (IMPU) file by either including a new updated IMPU file or including data describing an update to the content in the IMPU file.

During the registration process, the RSP system may have received a request from the billing system for an ICCID to associate with the UE, and thus the RSP system may be aware that the eSIM profile with the ICCID may be requested by the UE in a short time. In this way, the RSP system may be triggered to update the base eSIM profile associated with the ICCID provided to the billing system in response to allocating the base eSIM profile associated with the ICCID to the UE and notifying the billing system of this allocation. A request application at the RSP system may transmit a request to the OTA system for the update associated with the base eSIM profile. The request may include, for example, the ICCID of the base eSIM profile and/or the MSISDN of the UE.

Upon receiving the request, an update application of the OTA system may obtain the ICCID of the base eSIM profile indicated in the request, and search a data store at the OTA system for the update associated with the base eSIM profile. The update application may obtain the update associated with the base eSIM Profile, and transmit the update back to the RSP system. As mentioned above, the update sent back to the RSP system may include the actual data or files that should be added/updated/modified at the base eSIM profile, or may include data describing a modification (e.g., update/addition/deletion) that may need to be made to the data or files stored with the base eSIM profile. In the latter case in which the update only includes data describing the modification (i.e., not the actual updated files/data), the update sent to the RSP system may be smaller in size. By reducing the size of the data transmitted to the RSP system, and sending this data to the RSP system for updating the base eSIM profile instead of over a backhaul network to the end UE, the embodiments disclosed herein greatly increase network capacity.

Once the RSP system receives the update, an update application at the RSP system may perform the update on the base eSIM profile to obtain the updated eSIM profile. For example, when the update indicates a modification to an existing file (i.e., the update includes the actual modified file or the modified data to be included in the file), the update application may update the base eSIM profile to obtain the updated eSIM profile by replacing the previous file with the modified file and updating the data in the file to instead be the modified data. When the update indicates a new file to be added to the base eSIM profile (i.e., the update includes the actual new file or an instruction for the update application to generate a new file with certain data), the update application may update the base eSIM profile to obtain the updated eSIM profile by adding the new file to the eSIM profile or generating a new file with the data and adding this file to the base eSIM profile.

The update application of the RSP system may then transmit a notification to the OTA system indicating that the updated eSIM profile has been created at the RSP system, and that the OTA system may no longer need to maintain the update to the eSIM profile in the data store. The notification may include the ICCID of the eSIM profile and/or the MSISDN of the UE and a flag or bit, for example, set to indicate that the eSIM profile corresponding to the ICCID has been updated. In response to receiving this notification, the OTA system may delete the update to the eSIM profile from the data store.

The UE may subsequently request the eSIM profile allocated to the UE from the RSP system, as described above, using a QR code or some other method of securely communicating with the RSP. The update application at the RSP system may obtain the updated eSIM profile in response to the request and provide the updated eSIM profile to the UE. The UE may download the updated eSIM profile (i.e., instead of the base eSIM profile) and maintain the updated eSIM profile at the eUICC of the UE.

Subsequent to downloading the updated eSIM profile, the UE may begin accessing a cellular network through the carrier network by authenticating with the carrier network using the credentials and keys stored in the updated eSIM profile. When the UE first connects to the carrier network, an EIR system in the core network may determine that the UE is connecting to the carrier network for the first time, and thus updates may need to be performed to the eSIM profile at the UE. The EIR may transmit a request to the OTA system to determine whether the OTA is maintaining any pending updates for the eSIM profile associated with the UE, in which the request may include the ICCID of the eSIM profile at the UE or the MSISDN of the UE. The OTA system, already having deleted the update, may respond to the EIR system with a message indicating that, at that moment, the eSIM profile at the UE appears to be up-to-date, and that there are no pending updates indicated for the eSIM profile at the UE. At a later time, however, the OTA may have further updates to the eSIM profile. However, these updates may not be considered as part of the activation process for the eSIM profile.

In this way, the embodiments disclosed herein activate the eSIM profile in a far more efficient and effective manner, by reducing the load on the network and offloading the updating of the eSIM profile to the core network (instead of the UE). In other words, the embodiments disclosed herein reduce the amount of data that may need to be forwarded through the network to fully active an eSIM profile. In addition, the UE merely downloads an updated eSIM profile to begin fully authorized and proper access to the carrier network because the load of updating the eSIM profile is instead performed at the RSP system.

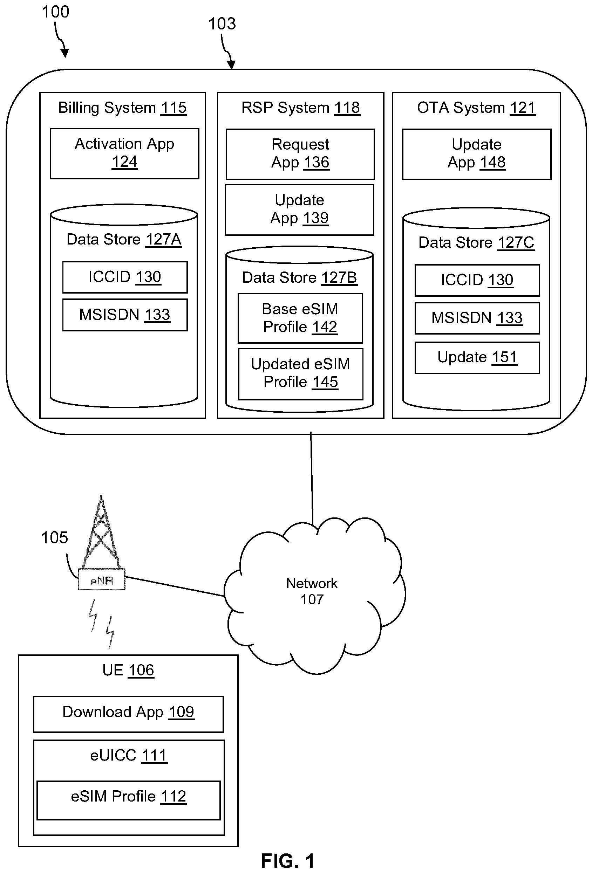

Turning now to FIG. 1, a communication system 100 is described. The communication system 100 comprises a core network 103, a cell site 105, UE 106, and a network 107. The core network 103 may be part of a carrier network, both of which may be owned and operated by an MNO. UE 106 may be connected to the core network 103 and the carrier network via the cell site 105.

The cell site 105 may provide the UE 106 a wireless communication link to the core network 103 and/or network 107 according to a 5G, a long term evolution (LTE), a code division multiple access (CDMA), or a global system for mobile communications (GSM) wireless telecommunication protocol. The network 107 may be one or more private networks, one or more public networks, the Internet, or a combination thereof. While FIG. 1 shows the core network 103 as being separate from the network 107, it should be appreciated that, in some embodiments, at least a portion of the core network 103 may be part of the network 107.

The UE 106 may be a cell phone, a mobile phone, a smart phone, a personal digital assistant (PDA), an Internet of things (loT) device, a wearable computer, a headset computer, a laptop computer, a tablet computer, or a notebook computer. As shown in FIG. 1, UE 106 may include a download application 109 and an eUICC 111. The eUICC 111 may be physically included in the hardware of the UE 106 and may maintain multiple eSIM profiles 112. The eUICC may allow for OTA switching of MNOs by switching between the different eSIM profiles 112. The download application 109 may comprise instructions stored on a non-transitory memory of the UE 106, which when executed by a processor of the UE 106, cause the UE 106 to be configured to download an eSIM profile 112, in particular an updated eSIM profile 145, from the core network 103, as further described herein. The download application 109 may communicate with the core network 103 using one or more application programming interfaces (APIs) and one or more API calls.

The carrier network may be a network including a radio access network (RAN) and a core network 103. The RAN may include the access network containing the radio elements of a cell network, and the core network 110 may include the elements that manage the subscriber information, call setup and routing, and related system supports. In an embodiment, the core network 103 may be an evolved packet core (EPC) core network. The core network 103 may be configured to implement a 5G, a LTE, a CDMA, or a GSM wireless telecommunication protocol. In one embodiment, the core network 103 may be a 3rd Generation Partnership Project (3GPP) Evolved Packet System (EPS).

As shown in FIG. 1, the core network 103 may include the billing system 115, the RSP system 118, the OTA system 121, and, as should be appreciated, other systems, servers, and components not otherwise shown or described herein. The billing system 115 may be responsible for registering the UE 106 with the MNO upon, for example, a user of the UE 106 entering into a contract with the MNO based on subscription services provided to the UE 106 by the MNO. The billing system 115 may include the activation application 124, which may include instructions stored on a non-transitory memory of the billing system 115, which when executed by a processor of the billing system 115, cause the activation application 124 to perform the steps of registering the UE 106 with the MNO. The steps of registering the UE 106 with the MNO may involve the activation application 124 receiving an indication that the UE 106 has contracted with the MNO, the activation application 124 requesting data (e.g., an ICCID 130) from the RSP system 118 describing a base eSIM profile 142 allocated to the UE 106, the activation application 124 receiving the data describing the base eSIM profile 142 from the RSP system 118, and storing this data in the billing system 115 for various purposes. To this end, the billing system 115 may include or be coupled to a data store 127A, which may comprise one or more non-transitory memories, configured to store data associated with registered UEs 106 belonging to subscribers of the MNO. The data stored at the data store 127A may include, for example, the ICCID 130 and a MSISDN 133 of registered UEs 106 associated with subscribers of the MNO.

The RSP system 118 may similarly include or be coupled to a data store 127B, which may also comprise one or more non-transitory memories, configured to store data describing physical SIM cards and eSIM profiles procured for and/or registered with the MNO. The data store 127B may store base eSIM profiles 142 and updated eSIM profiles 145. Each base eSIM profile 142 may include an ICCID 130 identifying the eSIM profile 142 and, for example, other data identifying the MNO. In contrast, the updated eSIM profile 145 may be similar to the corresponding base eSIM profile 142, but may also additionally include data related to the particular subscriber or UE 106 to which the updated eSIM profile 145 is allocated. The updated eSIM profile 145 may also be updated to include any updates 151 that are maintained by the OTA system 121.

The RSP system 118 may further include a request application 136 and an update application 139. The request application 136 and the update application 139 may both include instructions stored on a non-transitory memory of the RSP system 118, which when executed by a processor of the RSP system 118, cause the request application 136 and the update application 139 to perform the steps described herein. The request application 136 of the RSP system 118 may request updates 151 from the OTA system 121 and may receive the updates 151 from the OTA system 121. The update application 139 of the RSP system 118 may update a base eSIM profile 142 based on an update 151 received from the OTA system 121 to obtain the updated eSIM profile 145. The update application 139 may transmit a notification to the OTA system 121 indicating that the updated eSIM profile 145 has been generated based on an update 151 maintained at the OTA system 121, which may signal the OTA system 121 to delete the update 151. The update application 139 may also provide the updated eSIM profile 145 to the UE 106 to download in response to receiving a request from the UE 106 for an eSIM profile used to access the carrier network.

The OTA system 121 may also include an update application 148. The update application 148 may include instructions stored on a non-transitory memory of the OTA system 121, which when executed by a processor of the OTA system 121, may cause the update application 148 to perform the steps described herein. For example, the update application 148 may receive activation data from the billing system 115 indicating that a base eSIM profile 142 having an ICCID 130 may now be registered to a UE 106 having an MSISDN 133. The update application 148 may also determine the updates 151 that may need to be performed on the base eSIM profile 142 for the UE 106 to be fully and properly activated with the carrier network. The updates 151 may be determined, for example, based on subscription data associated with a subscriber behind the UE 106, data describing the UE 106 (e.g., device data, location data, capability data, etc.), data describing the subscriber behind the UE 106 (e.g., demographic data, account data, etc.), etc. In an embodiment, the OTA system may determine the updates that are to be performed on an eSIM profile based on logic in the OTA system indicating that the update is to be performed per line of business, certain subscription groups or devices, or other manners. The determination may also be based on the decision tree, which can include different updates for different criteria.

The OTA system 121 may also include or be coupled to a data store 127C, which may include one or more non-transitory memories that may store the update 151 to the base eSIM profile 142 in association with, for example, the ICCID 130 of the base eSIM profile 142 and/or the MSISDN of the UE 106 to which the base eSIM profile 142 is allocated. As described herein, the update 151 may be stored in the form of one or more files (e.g., MSISDN file, PRL file, IMPU file, etc.). The update 151 may also be stored in the form of data, formatted or encoded in a manner which may be compatible with the RSP system 117, the OTA system 121, and the UE 106, such that the RSP system 118 may update data in the base eSIM profile 142 based on the data in the update 151.

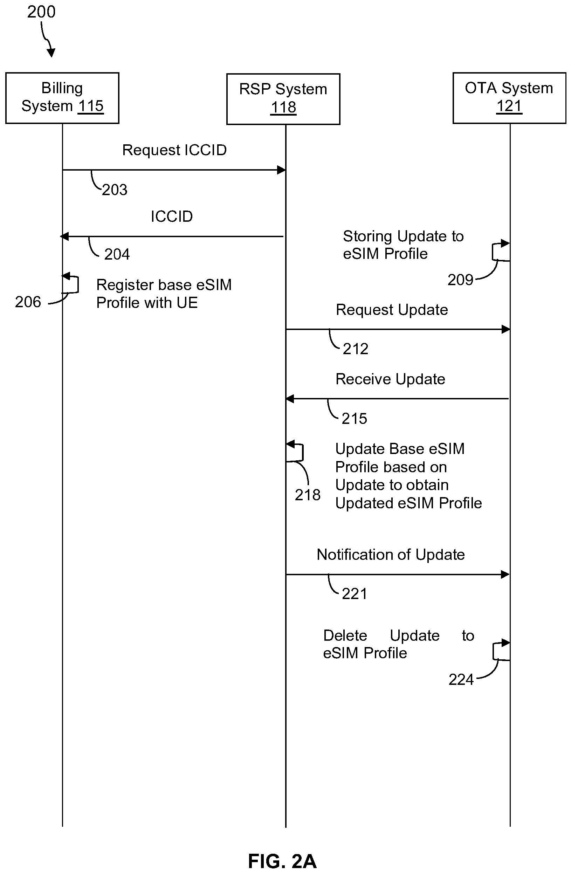

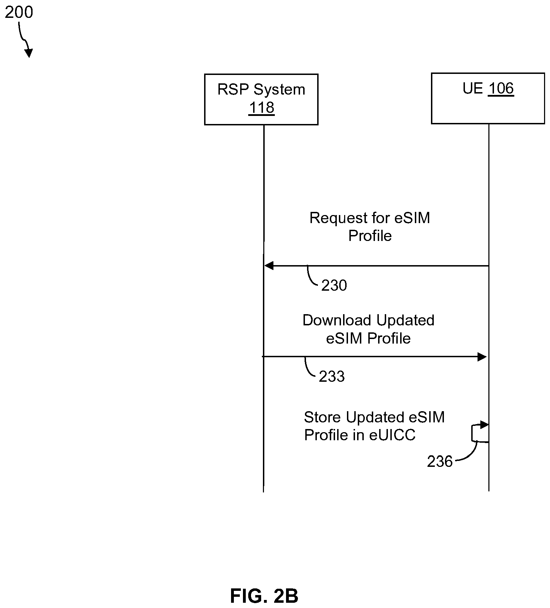

Referring now to FIGS. 2A-B, shown is a message sequence diagram illustrating a method 200 performed by the billing system 115, the RSP system 118, the OTA system 121, and the UE 106. FIG. 2A illustrates a first portion of method 200, and FIG. 2B illustrates a second portion of method 200, in which the steps shown in FIG. 2B are performed after the steps shown in FIG. 2A. In an embodiment, method 200 is performed after the billing system 115 is notified of a new contract between the subscriber behind UE 106 and the MNO based on a subscription for the UE 106.

Referring now specifically to FIG. 2A, method 200 begins with step 203. At step 203, the activation application 124 of the billing system 115 may transmit a request for data (e.g., the ICCID 130) of a base eSIM profile 142 to the RSP system 118. The base eSIM profile 142 may be allocated or assigned specifically to the UE 106 in the registration process, for example, by the RSP system 118 in response to receiving the request. To this end, the request sent in step 203 may include, for example, the MSISDN 133 of the UE 106 and/or data describing the UE 106.

At step 204, the RSP system 118 may obtain the allocated ICCID 130 for the UE 106 and transmit the ICCID 130 back to the billing system 115. As mentioned above, the RSP system 118 may select from one of the base eSIM profiles 142 stored at the RSP system 118 that have not yet been assigned to a device, allocate the selected base eSIM profile 142 to the UE 106, and obtain the ICCID 130 from the selected base eSIM profile 142 for transmission back to the billing system 115. The RSP system 118 (e.g., the update application 139) may also at this point indicate in the selected base eSIM profile 142 that the MSISDN 133 carried in the request is registered with the selected base eSIM profile 142.

At step 206, the activation application 124 of the billing system 115 may register the selected base eSIM profile 142 with the UE 106. For example, the activation application 124 may update the data store 127A to indicate that the MSISDN 133 associated with the UE 106 may now be associated with the ICCID 130 of the selected base eSIM profile 142. The activation application 124 may also update the billing accounts and invoicing accounts as necessary based on the registration.

The billing system 115 may send activation data to the OTA system 121 indicating that the base eSIM profile 142 having the ICCID 130 has now been assigned to the UE 106, such that the update application 148 of OTA system 121 may then be triggered to determine whether any pending updates 151 are available for the base eSIM profile 142. The update application 148 of the OTA system 121 may make this determination, for example, based on subscription data, data describing the UE 106, data describing the subscriber, etc. The update application 148 of the OTA system 121 may then generate and/or obtain the update 151 for the base eSIM profile 142. At step 209, the update application 148 of the OTA system 121 may store the update 151 to the base eSIM profile 142 in the data store 127C.

At this point, the RSP system 118 and the OTA system 121 are notified of the registration between the base eSIM profile 142 and the UE 106. In particular, the RSP system 118 may have been notified of this registration after steps 203 and 204, which may have triggered the RSP system 118 to select the base eSIM profile 142 for the UE 106. These steps 203 and 204 may also have triggered the RSP system 118 to determine whether an update 151 is pending for the recently selected base eSIM profile 142. At step 212, the request application 136 of the RSP system 118 may transmit a request to the OTA system 121 for an update 151 that may be pending for the recently selected base eSIM profile 142. The request may include, for example, the ICCID 130 of the base eSIM profile 142 and/or the MSISDN 133 of the UE 106.

At step 215, the update application 148 of the OTA system 121 may obtain the update 151 from the data store 127C based on the ICCID 130 (and/or MSISDN 133) carried in the request and transmit the update 151 to the request application 136 of the RSP system 118. At step 218, the update application 139 of the RSP system 118 may update the base eSIM profile 142 to include the update 151 and thereby generate the updated eSIM profile 145. The update application 139 of the RSP system 118 may perform the update based on the update 151 by, for example, modifying data contained in a file already stored in the base eSIM profile 142, deleting data contained in a file already stored in the base eSIM profile 142, adding a new file to the base eSIM profile 142, replace an old file with a new file in the base eSIM profile 142, deleting a file from the base eSIM profile 142, etc.

At step 221, the update application 139 of the RSP system 118 may transmit a notification indicating the creation of the updated eSIM profile 145 to the OTA system 121. The notification may include, for example, the ICCID 130 of the updated eSIM profile 145 (which is the same as the ICCID 130 of the corresponding base eSIM profile 142) and/or the MSISDN of the UE 106. The notification may also indicate that the update 151 present at the OTA system 121 has already been processed at the RSP system 118 such that the updated eSIM profile 145 is ready to send to the UE 106 after having been updated based on the update 151. The update application 148 of the OTA system 121 may be triggered to delete the update 151 from the data store 127C in response to receiving this notification. To this end, at step 224, the update application 148 of the OTA system 121 may delete the update 151 from the data store 127C.

Turning now to FIG. 2B, method 200 continues to steps 230, 233, and 236, which may be performed by the RSP system 118 and the UE 106. At step 230, the download application 109 of the UE 106 may transmit a request for an eSIM profile (which in these embodiments is the updated eSIM profile 145) to the RSP system 118. The request may be transmitted using a QR code or other form of a message that includes the MSISDN of the UE 106.

The RSP system 118 may obtain the updated eSIM profile 145 from the data store 127B. For example, the updated eSIM profile 145 not only includes the ICCID 130, the MSISDN of the UE 106, and MNO data, but also incorporates the update 151 such that the updated eSIM profile 145 is the most up-to-date version of the eSIM profile allocated for the UE 106, as described herein. The RSP system 118 may then transmit the updated eSIM profile 145 to the UE 106, such that at step 233, the download application 109 of the UE 106 may download the updated eSIM profile 145 from the RSP system 118. At step 236, the download application 109 of the UE 106 may then store the updated eSIM profile in the eUICC 111 of the UE 106.

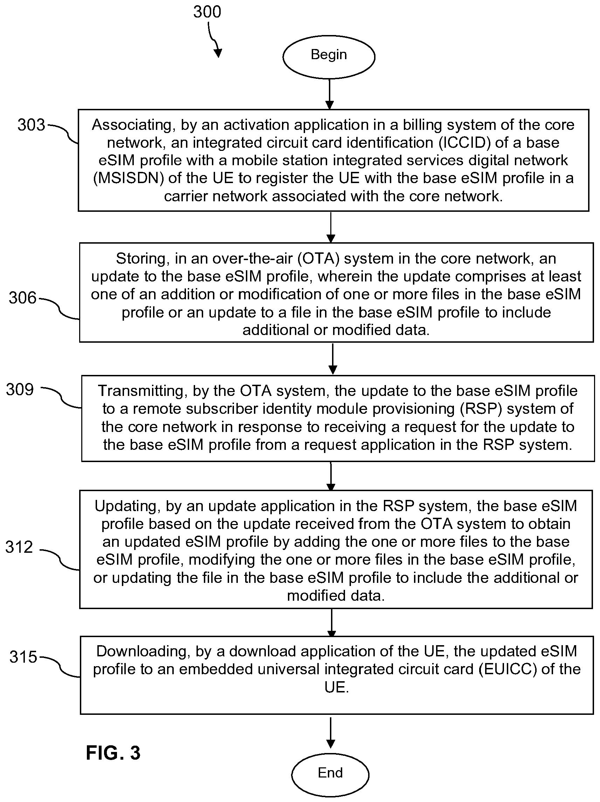

Referring now to FIG. 3, shown is a method 300. Method 300 may be a method for proactively updating and providing an eSIM profile to a UE 106. Method 300 may be performed by the core network 103 in the communication system 100. In an embodiment, method 300 may be performed after the billing system 115 has registered the UE 106 with the base eSIM profile 142.

At step 303, method 300 comprises associating, by an activation application 124 in a billing system 114 of the core network 103, an ICCID 130 of a base eSIM profile 142 with a MSISDN 133 of the UE 106 to register the UE 106 with the base eSIM profile 142 in a carrier network associated with the core network 103. At step 306, method 300 comprises storing, in an OTA system 121 in the core network 103, an update 151 to the base eSIM profile 142. In an embodiment, the update 151 includes at least one of an addition or modification of one or more files in the base eSIM profile 142 or an update to a file in the base eSIM profile 142 to include additional or modified data.

At step 309, method 300 comprises transmitting, by the OTA system 121, the update 151 to the base eSIM profile 142 to an RSP system 118 of the core network 103 in response to receiving a request for the update 151 to the base eSIM profile 142 from a request application 136 in the RSP system 118. At step 312, method 300 comprises updating, by an update application 139 in the RSP system 118, the base eSIM profile 142 based on the update 151 received from the OTA system 121 to obtain an updated eSIM profile 145 by adding the one or more files to the base eSIM profile 142, modifying the one or more files in the base eSIM profile 142, or updating the file in the base eSIM profile 142 to include the additional or modified data. At step 315, method 300 comprises downloading, by a download application 109 of the UE 106, the updated eSIM profile 145 to the eUICC 111 of the UE.

In some embodiments, method 300 may include additional features and steps not shown in FIG. 3. In an embodiment, method 300 may include receiving, by an activation application of a billing system in the core network, a request to register the UE with a carrier network associated with the core network, wherein the request comprises the MSISDN of the UE, and in response to receiving the request, transmitting, by the activation application of the billing system, a request for the ICCID of the eSIM profile to the RSP system. In an embodiment, method 300 includes transmitting, by the activation application of the billing system to the OTA system, activation data indicating the ICCID of the eSIM profile and the MSISDN of the UE. In an embodiment, the update to the base eSIM profile is stored in association with the ICCID of the base eSIM profile and the MSISDN of the UE at the OTA system, and the update comprises at least one of an updated MSISDN, a preferred roaming list, or an Internet Protocol (IP) multimedia public identity (IMPU) file update. In an embodiment, method 300 includes transmitting, by the RSP system, a notification to the OTA system indicating that the base eSIM profile has been updated at the RSP system, and in response to receiving the notification, deleting, from a data store in the OTA system, the update to the base eSIM profile. In an embodiment, method 300 includes storing, in the RSP system, the base eSIM profile before updating the base eSIM profile to obtain the updated eSIM profile, and receiving, by an activation application in a billing system of the core network, the ICCID of the base eSIM profile from the RSP system. In an embodiment, method 300 includes receiving, by an equipment identity register (EIR) system in the core network, an indication that the UE has connected to the carrier network, transmitting, by the EIR system to the OTA system, a request for an update to the updated eSIM profile at the UE in response to receiving the indication that the UE has connected to the carrier network, and transmitting, by the OTA system to the EIR system, a response indicating that the OTA system is not maintaining a pending update to the eSIM profile.

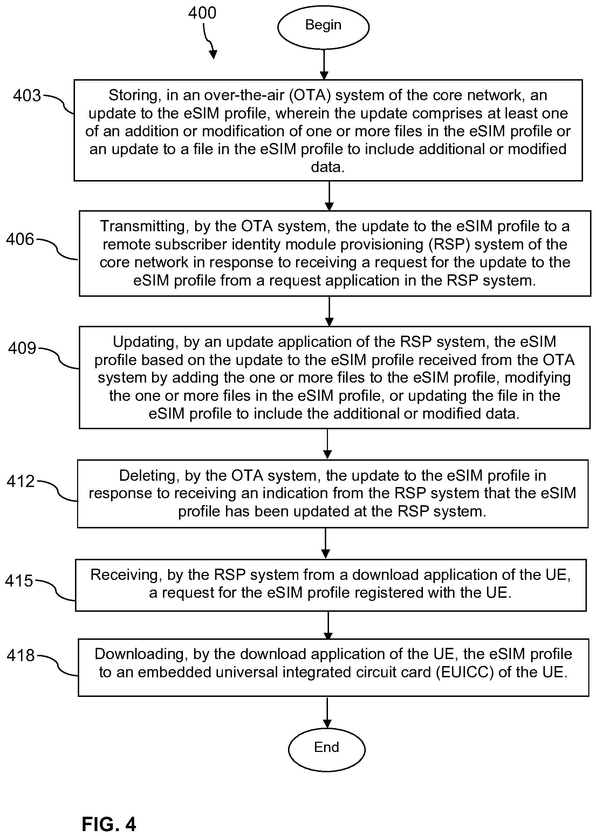

Referring now to FIG. 4, shown is a method 400. Method 400 may be a method for proactively updating and providing an eSIM profile to a UE 106. Method 400 may be performed by the core network 103 in the communication system 100. In an embodiment, method 400 may be performed after the billing system 115 has registered the UE 106 with an eSIM profile (e.g., the base eSIM profile 142).

At step 403, method 400 comprises storing, in an OTA system 121 of the core network 103, an update 151 to the eSIM profile (e.g., the base eSIM profile 142). In an embodiment, the update 151 comprises at least one of an addition or modification of one or more files in the eSIM profile or an update to a file in the eSIM profile to include additional or modified data. At step 406, method 400 comprises transmitting, by the OTA system 121, the update 151 to the eSIM profile to an RSP system 118 of the core network 103 in response to receiving a request for the update 151 to the eSIM profile from a request application in the RSP system 118.

At step 409, method 400 comprises updating, by an update application 139 of the RSP system 118, the eSIM profile based on the update 151 to the eSIM profile received from the OTA system 121 by adding the one or more files to the eSIM profile, modifying the one or more files in the eSIM profile, or updating the file in the eSIM profile to include the additional or modified data. At step 412, method 400 comprises deleting, by the OTA system 121, the update 151 to the eSIM profile in response to receiving an indication from the RSP system 118 that the eSIM profile has been updated at the RSP system 118.

At step 415, method 400 comprises receiving, by the RSP system 118 from a download application 109 of the UE 106, a request for the eSIM profile registered with the UE 106. At step 418, method 400 comprises downloading, by the download application 109 of the UE 106, the eSIM profile to an embedded universal integrated circuit card (EUICC) 111 of the UE 106.

In some embodiments, method 400 may include additional features and steps not shown in FIG. 4. In an embodiment, method 400 may further include associating, by an activation application in a billing system of the core network, an ICCID of the eSIM profile with a MSISDN of the UE to register the UE with the eSIM profile in a carrier network associated with the core network. In an embodiment, method 400 may further include storing, in the RSP system, the eSIM profile before the eSIM profile is registered with the UE in the carrier network, and receiving, by an activation application of a billing system in the core network, an ICCID of the eSIM profile from the RSP system. In an embodiment, method 400 may further include receiving, by the activation application of the billing system, a request to register the UE with the carrier network, wherein the request comprises the MSISDN of the UE, transmitting, by the activation application of the billing system, a request for the ICCID of the eSIM profile to the RSP system, and transmitting, by the activation application of the billing system to the OTA system, activation data indicating the ICCID of the eSIM profile and the MSISDN of the UE. In an embodiment, the update to the eSIM profile is stored in association with the ICCID of the eSIM profile and the MSISDN of the UE at the OTA system, and wherein the update comprises at least one of an updated MSISDN, a preferred roaming list, or an Internet Protocol (IP) multimedia public identity (IMPU) file update.

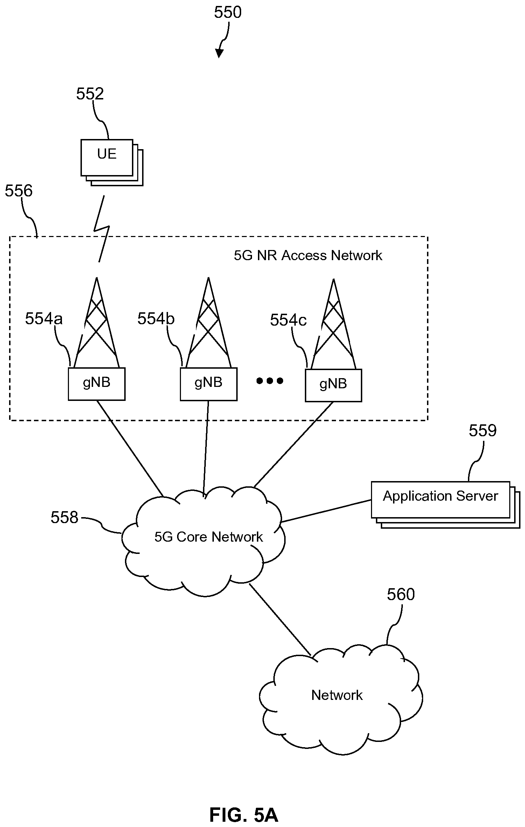

Turning now to FIG. 5A, an exemplary communication system 550 is described. Typically the communication system 550 includes a number of access nodes 554 that are configured to provide coverage in which UEs 552 such as cell phones, tablet computers, machine-type-communication devices, tracking devices, embedded wireless modules, and/or other wirelessly equipped communication devices (whether or not user operated), can operate. The access nodes 554 may be said to establish an access network 556. The access network 556 may be referred to as a radio access network (RAN) in some contexts. In a 5G technology generation an access node 554 may be referred to as a next Generation Node B (gNB). In 4G technology (e.g., long term evolution (LTE) technology) an access node 554 may be referred to as an evolved Node B (eNB). In 3G technology (e.g., code division multiple access (CDMA) and global system for mobile communication (GSM)) an access node 554 may be referred to as a base transceiver station (BTS) combined with a base station controller (BSC). In some contexts, the access node 554 may be referred to as a cell site or a cell tower. In some implementations, a picocell may provide some of the functionality of an access node 554, albeit with a constrained coverage area. Each of these different embodiments of an access node 554 may be considered to provide roughly similar functions in the different technology generations.

In an embodiment, the access network 556 comprises a first access node 554a, a second access node 554b, and a third access node 554c. It is understood that the access network 556 may include any number of access nodes 554. Further, each access node 554 could be coupled with a core network 558 that provides connectivity with various application servers 559 and/or a network 560. In an embodiment, at least some of the application servers 559 may be located close to the network edge (e.g., geographically close to the UE 552 and the end user) to deliver so-called "edge computing." The network 560 may be one or more private networks, one or more public networks, or a combination thereof. The network 560 may comprise the public switched telephone network (PSTN). The network 560 may comprise the Internet. With this arrangement, a UE 552 within coverage of the access network 556 could engage in air-interface communication with an access node 554 and could thereby communicate via the access node 554 with various application servers and other entities.

The communication system 550 could operate in accordance with a particular radio access technology (RAT), with communications from an access node 554 to UEs 552 defining a downlink or forward link and communications from the UEs 552 to the access node 554 defining an uplink or reverse link. Over the years, the industry has developed various generations of RATs, in a continuous effort to increase available data rate and quality of service for end users. These generations have ranged from "1G," which used simple analog frequency modulation to facilitate basic voice-call service, to "4G" - such as Long Term Evolution (LTE), which now facilitates mobile broadband service using technologies such as orthogonal frequency division multiplexing (OFDM) and multiple input multiple output (MIMO).

Recently, the industry has been exploring developments in "5G" and particularly "5G NR" (5G New Radio), which may use a scalable OFDM air interface, advanced channel coding, massive MIMO, beamforming, mobile mmWave (e.g., frequency bands above 24 GHz), and/or other features, to support higher data rates and countless applications, such as mission-critical services, enhanced mobile broadband, and massive Internet of Things (IoT). 5G is hoped to provide virtually unlimited bandwidth on demand, for example providing access on demand to as much as 20 gigabits per second (Gbps) downlink data throughput and as much as 10 Gbps uplink data throughput. Due to the increased bandwidth associated with 5G, it is expected that the new networks will serve, in addition to conventional cell phones, general internet service providers for laptops and desktop computers, competing with existing ISPs such as cable internet, and also will make possible new applications in internet of things (loT) and machine to machine areas.

In accordance with the RAT, each access node 554 could provide service on one or more radio-frequency (RF) carriers, each of which could be frequency division duplex (FDD), with separate frequency channels for downlink and uplink communication, or time division duplex (TDD), with a single frequency channel multiplexed over time between downlink and uplink use. Each such frequency channel could be defined as a specific range of frequency (e.g., in radio-frequency (RF) spectrum) having a bandwidth and a center frequency and thus extending from a low-end frequency to a high-end frequency. Further, on the downlink and uplink channels, the coverage of each access node 554 could define an air interface configured in a specific manner to define physical resources for carrying information wirelessly between the access node 554 and UEs 552.

Without limitation, for instance, the air interface could be divided over time into frames, subframes, and symbol time segments, and over frequency into subcarriers that could be modulated to carry data. The example air interface could thus define an array of time-frequency resource elements each being at a respective symbol time segment and subcarrier, and the subcarrier of each resource element could be modulated to carry data. Further, in each subframe or other transmission time interval (TTI), the resource elements on the downlink and uplink could be grouped to define physical resource blocks (PRBs) that the access node could allocate as needed to carry data between the access node and served UEs 552.

In addition, certain resource elements on the example air interface could be reserved for special purposes. For instance, on the downlink, certain resource elements could be reserved to carry synchronization signals that UEs 552 could detect as an indication of the presence of coverage and to establish frame timing, other resource elements could be reserved to carry a reference signal that UEs 552 could measure in order to determine coverage strength, and still other resource elements could be reserved to carry other control signaling such as PRB-scheduling directives and acknowledgement messaging from the access node 554 to served UEs 552. And on the uplink, certain resource elements could be reserved to carry random access signaling from UEs 552 to the access node 554, and other resource elements could be reserved to carry other control signaling such as PRB-scheduling requests and acknowledgement signaling from UEs 552 to the access node 554.

The access node 554, in some instances, may be split functionally into a radio unit (RU), a distributed unit (DU), and a central unit (CU) where each of the RU, DU, and CU have distinctive roles to play in the access network 556. The RU provides radio functions. The DU provides L1 and L2 real-time scheduling functions; and the CU provides higher L2 and L3 non-real time scheduling. This split supports flexibility in deploying the DU and CU. The CU may be hosted in a regional cloud data center. The DU may be co-located with the RU, or the DU may be hosted in an edge cloud data center.

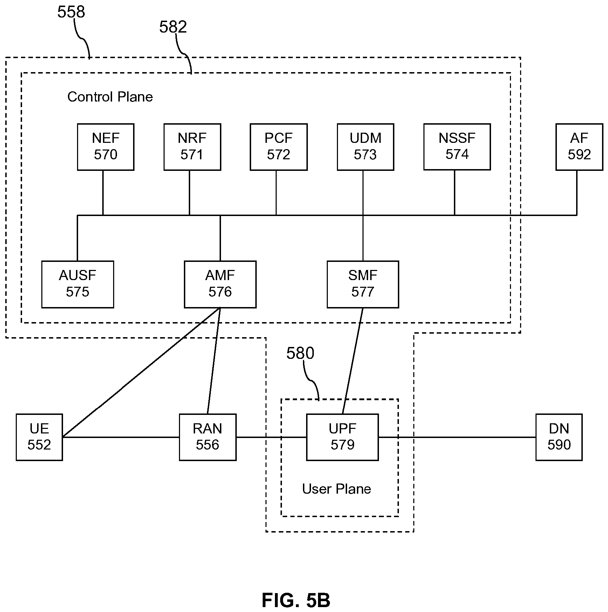

Turning now to FIG. 5B, further details of the core network 558 are described. In an embodiment, the core network 558 is a 5G core network. 5G core network technology is based on a service based architecture paradigm. Rather than constructing the 5G core network as a series of special purpose communication nodes (e.g., an HSS node, a MME node, etc.) running on dedicated server computers, the 5G core network is provided as a set of services or network functions. These services or network functions can be executed on virtual servers in a cloud computing environment which supports dynamic scaling and avoidance of long-term capital expenditures (fees for use may substitute for capital expenditures). These network functions can include, for example, a user plane function (UPF) 579, an authentication server function (AUSF) 575, an access and mobility management function (AMF) 576, a session management function (SMF) 577, a network exposure function (NEF) 570, a network repository function (NRF) 571, a policy control function (PCF) 572, a unified data management (UDM) 573, a network slice selection function (NSSF) 574, and other network functions. The network functions may be referred to as virtual network functions (VNFs) in some contexts.

Network functions may be formed by a combination of small pieces of software called microservices. Some microservices can be re-used in composing different network functions, thereby leveraging the utility of such microservices. Network functions may offer services to other network functions by extending application programming interfaces (APIs) to those other network functions that call their services via the APIs. The 5G core network 558 may be segregated into a user plane 580 and a control plane 582, thereby promoting independent scalability, evolution, and flexible deployment.

The UPF 579 delivers packet processing and links the UE 552, via the access network 556, to a data network 590 (e.g., the network 560 illustrated in FIG. 5A). The AMF 576 handles registration and connection management of non-access stratum (NAS) signaling with the UE 552. Said in other words, the AMF 576 manages UE registration and mobility issues. The AMF 576 manages reachability of the UEs 552 as well as various security issues. The SMF 577 handles session management issues. Specifically, the SMF 577 creates, updates, and removes (destroys) protocol data unit (PDU) sessions and manages the session context within the UPF 579. The SMF 577 decouples other control plane functions from user plane functions by performing dynamic host configuration protocol (DHCP) functions and IP address management functions. The AUSF 575 facilitates security processes.

The NEF 570 securely exposes the services and capabilities provided by network functions. The NRF 571 supports service registration by network functions and discovery of network functions by other network functions. The PCF 572 supports policy control decisions and flow based charging control. The UDM 573 manages network user data and can be paired with a user data repository (UDR) that stores user data such as customer profile information, customer authentication number, and encryption keys for the information. An application function 592, which may be located outside of the core network 558, exposes the application layer for interacting with the core network 558. In an embodiment, the application function 592 may be executed on an application server 559 located geographically proximate to the UE 552 in an "edge computing" deployment mode. The core network 558 can provide a network slice to a subscriber, for example an enterprise customer, that is composed of a plurality of 5G network functions that are configured to provide customized communication service for that subscriber, for example to provide communication service in accordance with communication policies defined by the customer. The NSSF 574 can help the AMF 576 to select the network slice instance (NSI) for use with the UE 552.

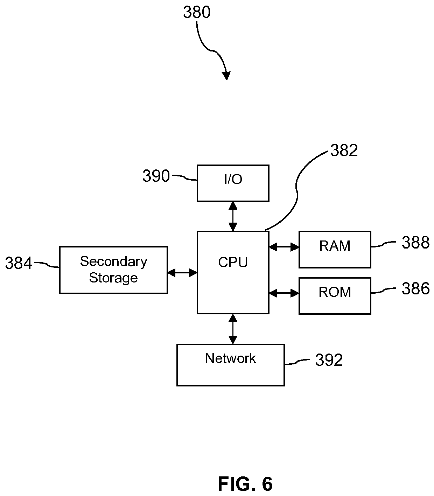

FIG. 6 illustrates a computer system 380 suitable for implementing one or more embodiments disclosed herein. The computer system 380 may be implemented as the UE 103, the billing system 115, the RSP system 118, and/or the OTA system 121. The computer system 380 includes a processor 382 (which may be referred to as a central processor unit or CPU) that is in communication with memory devices including secondary storage 384, read only memory (ROM) 386, random access memory (RAM) 388, input/output (I/O) devices 390, and network connectivity devices 392. The processor 382 may be implemented as one or more CPU chips.

It is understood that by programming and/or loading executable instructions onto the computer system 380, at least one of the CPU 382, the RAM 388, and the ROM 386 are changed, transforming the computer system 380 in part into a particular machine or apparatus having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

Additionally, after the system 380 is turned on or booted, the CPU 382 may execute a computer program or application. For example, the CPU 382 may execute software or firmware stored in the ROM 386 or stored in the RAM 388. In some cases, on boot and/or when the application is initiated, the CPU 382 may copy the application or portions of the application from the secondary storage 384 to the RAM 388 or to memory space within the CPU 382 itself, and the CPU 382 may then execute instructions that the application is comprised of. In some cases, the CPU 382 may copy the application or portions of the application from memory accessed via the network connectivity devices 392 or via the I/O devices 390 to the RAM 388 or to memory space within the CPU 382, and the CPU 382 may then execute instructions that the application is comprised of. During execution, an application may load instructions into the CPU 382, for example load some of the instructions of the application into a cache of the CPU 382. In some contexts, an application that is executed may be said to configure the CPU 382 to do something, e.g., to configure the CPU 382 to perform the function or functions promoted by the subject application. When the CPU 382 is configured in this way by the application, the CPU 382 becomes a specific purpose computer or a specific purpose machine.

The secondary storage 384 is typically comprised of one or more disk drives or tape drives and is used for non-volatile storage of data and as an over-flow data storage device if RAM 388 is not large enough to hold all working data. Secondary storage 384 may be used to store programs which are loaded into RAM 388 when such programs are selected for execution. The ROM 386 is used to store instructions and perhaps data which are read during program execution. ROM 386 is a non-volatile memory device which typically has a small memory capacity relative to the larger memory capacity of secondary storage 384. The RAM 388 is used to store volatile data and perhaps to store instructions. Access to both ROM 386 and RAM 388 is typically faster than to secondary storage 384. The secondary storage 384, the RAM 388, and/or the ROM 386 may be referred to in some contexts as computer readable storage media and/or non-transitory computer readable media.

I/O devices 390 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 392 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards, and/or other well-known network devices. The network connectivity devices 392 may provide wired communication links and/or wireless communication links (e.g., a first network connectivity device 392 may provide a wired communication link and a second network connectivity device 392 may provide a wireless communication link). Wired communication links may be provided in accordance with Ethernet (IEEE 802.3), Internet protocol (IP), time division multiplex (TDM), data over cable service interface specification (DOCSIS), wavelength division multiplexing (WDM), and/or the like. In an embodiment, the radio transceiver cards may provide wireless communication links using protocols such as code division multiple access (CDMA), global system for mobile communications (GSM), long-term evolution (LTE), WiFi (IEEE 802.11), Bluetooth, Zigbee, narrowband Internet of things (NB loT), near field communications (NFC) and radio frequency identity (RFID). The radio transceiver cards may promote radio communications using 5G, 5G New Radio, or 5G LTE radio communication protocols. These network connectivity devices 392 may enable the processor 382 to communicate with the Internet or one or more intranets. With such a network connection, it is contemplated that the processor 382 might receive information from the network, or might output information to the network in the course of performing the above-described method steps. Such information, which is often represented as a sequence of instructions to be executed using processor 382, may be received from and outputted to the network, for example, in the form of a computer data signal embodied in a carrier wave.

Such information, which may include data or instructions to be executed using processor 382 for example, may be received from and outputted to the network, for example, in the form of a computer data baseband signal or signal embodied in a carrier wave. The baseband signal or signal embedded in the carrier wave, or other types of signals currently used or hereafter developed, may be generated according to several methods well-known to one skilled in the art. The baseband signal and/or signal embedded in the carrier wave may be referred to in some contexts as a transitory signal.

The processor 382 executes instructions, codes, computer programs, scripts which it accesses from hard disk, floppy disk, optical disk (these various disk based systems may all be considered secondary storage 384), flash drive, ROM 386, RAM 388, or the network connectivity devices 392. While only one processor 382 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 384, for example, hard drives, floppy disks, optical disks, and/or other device, the ROM 386, and/or the RAM 388 may be referred to in some contexts as non-transitory instructions and/or non-transitory information.

In an embodiment, the computer system 380 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the computer system 380 to provide the functionality of a number of servers that is not directly bound to the number of computers in the computer system 380. For example, virtualization software may provide twenty virtual servers on four physical computers. In an embodiment, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third party provider. Some cloud computing environments may comprise cloud computing resources owned and operated by the enterprise as well as cloud computing resources hired and/or leased from a third party provider.

In an embodiment, some or all of the functionality disclosed above may be provided as a computer program product. The computer program product may comprise one or more computer readable storage medium having computer usable program code embodied therein to implement the functionality disclosed above. The computer program product may comprise data structures, executable instructions, and other computer usable program code. The computer program product may be embodied in removable computer storage media and/or non-removable computer storage media. The removable computer readable storage medium may comprise, without limitation, a paper tape, a magnetic tape, magnetic disk, an optical disk, a solid state memory chip, for example analog magnetic tape, compact disk read only memory (CD-ROM) disks, floppy disks, jump drives, digital cards, multimedia cards, and others. The computer program product may be suitable for loading, by the computer system 380, at least portions of the contents of the computer program product to the secondary storage 384, to the ROM 386, to the RAM 388, and/or to other non-volatile memory and volatile memory of the computer system 380. The processor 382 may process the executable instructions and/or data structures in part by directly accessing the computer program product, for example by reading from a CD-ROM disk inserted into a disk drive peripheral of the computer system 380. Alternatively, the processor 382 may process the executable instructions and/or data structures by remotely accessing the computer program product, for example by downloading the executable instructions and/or data structures from a remote server through the network connectivity devices 392. The computer program product may comprise instructions that promote the loading and/or copying of data, data structures, files, and/or executable instructions to the secondary storage 384, to the ROM 386, to the RAM 388, and/or to other non-volatile memory and volatile memory of the computer system 380.

In some contexts, the secondary storage 384, the ROM 386, and the RAM 388 may be referred to as a non-transitory computer readable medium or a computer readable storage media. A dynamic RAM embodiment of the RAM 388, likewise, may be referred to as a non-transitory computer readable medium in that while the dynamic RAM receives electrical power and is operated in accordance with its design, for example during a period of time during which the computer system 380 is turned on and operational, the dynamic RAM stores information that is written to it. Similarly, the processor 382 may comprise an internal RAM, an internal ROM, a cache memory, and/or other internal non-transitory storage blocks, sections, or components that may be referred to in some contexts as non-transitory computer readable media or computer readable storage media.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the disclosure.

Further embodiments of this disclosure reside in the following numbered clauses:
Clause 15. A method performed by a core network for proactively updating and providing an electronic subscriber identity module (eSIM) profile to a user equipment (UE), comprising:
   storing, in an over-the-air (OTA) system of the core network, an update to the eSIM profile, wherein the update comprises at least one of an addition or modification of one or more files in the eSIM profile or an update to a file in the eSIM profile to include additional or modified data;
   transmitting, by the OTA system, the update to the eSIM profile to a remote subscriber identity module provisioning (RSP) system of the core network in response to receiving a request for the update to the eSIM profile from a request application in the RSP system;
   updating, by an update application of the RSP system, the eSIM profile based on the update to the eSIM profile received from the OTA system by adding the one or more files to the eSIM profile, modifying the one or more files in the eSIM profile, or updating the file in the eSIM profile to include the additional or modified data;
   deleting, by the OTA system, the update to the eSIM profile in response to receiving an indication from the RSP system that the eSIM profile has been updated at the RSP system;
   receiving, by the RSP system from a download application of the UE, a request for the eSIM profile registered with the UE; and
   downloading, by the download application of the UE, the eSIM profile to an embedded universal integrated circuit card (EUICC) of the UE.
Clause 16. The method of clause 15, further comprising associating, by an activation application of a billing system of the core network, an integrated circuit card identification (ICCID) of the eSIM profile with a mobile station international subscriber directory number (MSISDN) of the UE to register the UE with the eSIM profile in a carrier network associated with the core network.
Clause 17. The method of clause 16, further comprising:
   storing, in the RSP system, the eSIM profile before the eSIM profile is registered with the UE in the carrier network; and
   receiving, by the activation application, an integrated circuit card identification (ICCID) of the eSIM profile from the RSP system.
Clause 18. The method of clause 17, further comprising:
   receiving, by the activation application of the billing system, a request to register the UE with the carrier network, wherein the request comprises the MSISDN of the UE; and
   transmitting, by the activation application of the billing system, a request for the ICCID of the eSIM profile to the RSP system.
Clause 19. The method of clause 18, further comprising transmitting, by the activation application of the billing system to the OTA system, activation data indicating the ICCID of the eSIM profile and the MSISDN of the UE.
Clause 20. The method of clause 15, wherein the update to the eSIM profile is stored in association with an integrated circuit card identification (ICCID) of the eSIM profile and a mobile station international subscriber directory number (MSISDN) of the UE at the OTA system, and wherein the update comprises at least one of an updated MSISDN, a preferred roaming list, or an Internet Protocol (IP) multimedia public identity (IMPU) file update.

## Claims

1. A method performed by a core network for proactively updating and providing an electronic subscriber identity module, eSIM, profile to a user equipment (UE), comprising:
associating, by an activation application of a billing system of the core network, an integrated circuit card identification, ICCID, of a base eSIM profile with a mobile station international subscriber directory number, MSISDN, of the UE to register the UE with the base eSIM profile in a carrier network associated with the core network;
storing, in an over-the-air, OTA, system in the core network, an update to the base eSIM profile, wherein the update comprises at least one of an addition or modification of one or more files in the base eSIM profile or an update to a file in the base eSIM profile to include additional or modified data;
transmitting, by the OTA system, the update to the base eSIM profile to a remote subscriber identity module provisioning, RSP, system of the core network in response to receiving a request for the update to the base eSIM profile from a request application in the RSP system;
updating, by an update application of the RSP system, the base eSIM profile based on the update received from the OTA system to obtain an updated eSIM profile by adding the one or more files to the base eSIM profile, modifying the one or more files in the base eSIM profile, or updating the file in the base eSIM profile to include the additional or modified data; and
downloading, by a download application of the UE, the updated eSIM profile to an embedded universal integrated circuit card, EUICC, of the UE.

2. The method of claim 1, further comprising:
receiving, by an activation application of a billing system in the core network, a request to register the UE with a carrier network associated with the core network, wherein the request comprises the MSISDN of the UE; and
in response to receiving the request, transmitting, by the activation application of the billing system, a request for the ICCID of the eSIM profile to the RSP system.

3. The method of claim 1, further comprising transmitting, by the activation application of the billing system to the OTA system, activation data indicating the ICCID of the eSIM profile and the MSISDN of the UE.

4. The method of claim 1, wherein the update to the base eSIM profile is stored in association with the ICCID of the base eSIM profile and the MSISDN of the UE at the OTA system, and wherein the update comprises at least one of an updated MSISDN, a preferred roaming list, or an Internet Protocol, IP, multimedia public identity, IMPU, file update.

5. The method of claim 1, further comprising:
transmitting, by the RSP system, a notification to the OTA system indicating that the base eSIM profile has been updated at the RSP system; and
in response to receiving the notification, deleting, from a data store in the OTA system, the update to the base eSIM profile.

6. The method of claim 1, further comprising:
storing, in the RSP system, the base eSIM profile before updating the base eSIM profile to obtain the updated eSIM profile; and
receiving, by an activation application of a billing system of the core network, the ICCID of the base eSIM profile from the RSP system.

7. The method of claim 1, further comprising:
receiving, by an equipment identity register, EIR, system in the core network, an indication that the UE has connected to the carrier network;
transmitting, by the EIR system to the OTA system, a request for an update to the updated eSIM profile at the UE in response to receiving the indication that the UE has connected to the carrier network; and
transmitting, by the OTA system to the EIR system, a response indicating that the OTA system is not maintaining a pending update to the eSIM profile.

8. A communication system, comprising:
an activation application, stored in a first non-transitory memory associated with a billing system, which when executed by a first processor, causes the first processor to be configured to associate an integrated circuit card identification, ICCID, of a base electronic subscriber identity module, eSIM, profile with a mobile station international subscriber directory number, MSISDN, of a user equipment, UE, to register the UE with the base eSIM profile in a carrier network;
a second non-transitory memory associated with an over-the-air, OTA, system, wherein the second non-transitory memory is configured to store an update to the base eSIM profile, wherein the update comprises at least one of an addition or modification of one or more files in the base eSIM profile or an update to a file in the base eSIM profile to include additional or modified data;
a request application, stored in a third non-transitory memory associated with a remote subscriber identity module provisioning, RSP, system, which when executed by a third processor, causes the third processor to be configured to receive, from the OTA system, the update to the base eSIM profile;
an update application, stored in the third non-transitory memory associated with the RSP system, which when executed by the third processor, causes the third processor to be configured to update the base eSIM profile based on the update received from the OTA system to obtain an updated eSIM profile;
a download application, stored in a fourth non-transitory memory associated with the UE, which when executed by a fourth processor, causes the fourth processor to be configured to:
transmit, to the RSP system, request for the updated eSIM profile registered with the UE; and
download the updated eSIM profile to the UE.

9. The communication system of claim 8, wherein to update the base eSIM profile, the update application is further configured to:
add the one or more files to the base eSIM profile;
modify the one or more files in the base eSIM profile; or
update the file already in the base eSIM profile to include the additional or modified data.

10. The communication system of claim 8, wherein the update to the base eSIM profile is stored in association with the ICCID of the base eSIM profile and the MSISDN of the UE at the OTA system.

11. The communication system of claim 8, wherein the update comprises at least one of an updated MSISDN, a preferred roaming list, or an Internet Protocol (IP) multimedia public identity, IMPU, file update.

12. The communication system of claim 8, wherein the update application of the RSP system is configured to transmit a notification to the OTA system indicating that the updated eSIM profile has been created.

13. The communication system of claim 8, further comprising an application, stored in the second non-transitory memory associated with the OTA system, which when executed by a second processor, causes the second processor to be configured to delete the update to the base eSIM profile from the second non-transitory memory.

14. The communication system of claim 8, further comprising an application, stored in the second non-transitory memory associated with the OTA system, which when executed by a second processor, causes the second processor to be configured to notify an equipment identity register, EIR, system that the OTA system is not maintaining a pending update to the base eSIM profile.

15. A method performed by a core network for proactively updating and providing an electronic subscriber identity module, eSIM, profile to a user equipment, UE, comprising:
storing, in an over-the-air, OTA, system of the core network, an update to the eSIM profile, wherein the update comprises at least one of an addition or modification of one or more files in the eSIM profile or an update to a file in the eSIM profile to include additional or modified data;
transmitting, by the OTA system, the update to the eSIM profile to a remote subscriber identity module provisioning, RSP, system of the core network in response to receiving a request for the update to the eSIM profile from a request application in the RSP system;
updating, by an update application of the RSP system, the eSIM profile based on the update to the eSIM profile received from the OTA system by adding the one or more files to the eSIM profile, modifying the one or more files in the eSIM profile, or updating the file in the eSIM profile to include the additional or modified data;
deleting, by the OTA system, the update to the eSIM profile in response to receiving an indication from the RSP system that the eSIM profile has been updated at the RSP system;
receiving, by the RSP system from a download application of the UE, a request for the eSIM profile registered with the UE; and
downloading, by the download application of the UE, the eSIM profile to an embedded universal integrated circuit card, EUICC, of the UE.
